# EUROPEAN PATENT SPECIFICATION

(11) **EP 2 077 488 B1**
(45) Date of publication and mention of the grant of the patent: **09.02.2011**
(21) Application number: 08022074.2
(22) Date of filing: 18.12.2008
(51) Int. Cl.: G06F 3/044, G06F 3/033

(54) **Stylus and electronic device**
Stift und elektronische Vorrichtung
Stylet et dispositif électronique

(30) Priority: 28.12.2007 TW 96151019
(43) Date of publication of application: 08.07.2009
(73) Proprietor: HTC Corporation, Taoyuan County 330 (TW)
(72) Inventor: Liu, Yi-Ching, Taoyuan City Taoyuan County 330 (TW); Tseng, Hsu-Hsiang, Taoyuan City Taoyuan County 330 (TW)
(74) Representative: Becker, Eberhard

(56) References cited:
- WO-A-02/43045
- WO-A-02/50636
- US-A- 5 654 529
- US-A1- 2005 162 411

## Description

### BACKGROUND

### 1. Field of the Invention

The present application generally relates to a stylus and an electronic device using the stylus, in particular, to a stylus with a magnetic head and an electronic device using the stylus.

### 2. Description of Related Art

With the rapid development of technology, most manufacturers of electronic devices such as notebook computers, mobile phones, or portable multimedia players start to use touch panels to replace conventional keyboards to serve as input interfaces of a new generation. Particularly, the current touch panels are generally classified into capacitive touch panels and resistive touch panels. Taking iPhone available from Apple Inc. as an example, the iPhone uses a capacitive touch panel as the input interface, and a user can input words or select a certain option on a menu merely through a finger.

However, in order to cater to the user's operation mode of using a finger, icons displayed on a screen must be configured in an appropriate size to prevent the user from miss touching the icons. Furthermore, a part of the screen is often shielded by finger of the user when the capacitive touch panel is used. Moreover, a conventional stylus has a small head, so that a user can click small icons conveniently, but the conventional stylus is only applicable to resistive touch panels, but not applicable to capacitive touch panels.

WO 02/50636 discloses a touchpad code entry system utilizing a mutual capacitance sensitive touchpad having a plurality of distinct zones, wherein movement of a user's finger on the surface of the touchpad between zones, the act of lifting a finger off of the touchpad surface, the act of placing a finger on the touchpad surface, and the movement of a specific pattern of a finger within a single zone are all actions that will generate characters that are transmitted from the touchpad to a receiving device. A small number of movements of a finger across the touchpad are thus capable of generating a large number of characters for use in a password or code, and thereby take advantage of the security benefits that can be achieved, but without having to memorize the exact password, but only a few movements of a finger or stylus.

WO 02/ 43045 discloses a stylus input device that operates utilizing magnetic fields, wherein a permanent magnet is disposed within a passive stylus that is detectable by a plurality of magnetic sensors that remove the magnetic field of the stylus from the earth's relative magnetic field to thereby obtain vectors that are used in a triangulation equation to determine the location of the stylus in two or three dimensions, depending upon the number of magnetic sensors that are used, wherein one set of magnetic sensors can be used as a reference for earth's magnetic field, and wherein each of the magnetic sensors includes a polarizing coil to change direction of sensitivity, a null coil and a flipping coil.

US 5 654 529 discloses a stylus-input computing system having a planar display and a superimposed, transparent digitizer. The combination is arranged to simulate writing or drawing with pencil on paper: the writing end of a passive stylus is pressed on and moved across the digitizer surface and a line on the display is produced directly under the stylus path. In order to complete the analogy to pencil and paper, display erasure is also provided. Under the display is located an inductive winding. The other end of the stylus contains a small permanent magnet. When the magnet end of the stylus is pressed against the digitizer and moved over a display line, a small voltage is induced in the inductive winding. This voltage is converted into a logic signal. The assertion of this signal together with a signal from the digitizer results in the erasure of display traces in the region inferred from the digitizer signal.

US 2005/162411 discloses a user input system, comprising a coil for generating an alternating magnetic field, a cordless pen, and a capacitive current measuring arrangement or an electric field sensing arrangement. The cordless pen comprises a resonant circuit, a conductive housing and a conducting tip. The alternating magnetic field induces an alternating voltage in the resonant circuit, which is coupled to the conducting tip. The capacitive current measuring arrangement comprises a resistive sheet and current measuring means arranged to measure a capacitive current flowing from the conducting tip to the resistive sheet. The electric field sensing arrangement comprises an electric field sensing reception electrode and current sensing circuitry for determining a current excited in the electric field sensing reception electrode by an electric field generated by the conducting tip. In each case the currents are sensed at plural locations and the differing magnitudes compared to determine a position of the conducting tip relative to the plural locations. The system may also be adapted to sense a user's finger. The user input system may be incorporated in a display device, for example an active matrix liquid crystal display device.

### SUMMARY OF THE INVENTION

Accordingly, the present application is directed to a stylus for operating a capacitive touch panel.

The present application is also directed to an electronic device, which uses a stylus to operate a capacitive touch panel.

The present application provides a stylus, which is adapted to control a capacitive touch panel. The stylus has a handle and a head. The head is magnetic.

The present application provides an electronic device, which includes a device body and a stylus. The device body has a capacitive touch panel. The stylus has a handle and a head. The head is magnetic. The stylus is used for controlling the capacitive touch panel of the body.

To sum up, the head of the stylus of the present application is magnetic. Therefore, when a relative speed exists between the head and the capacitive touch panel, an inducting current is generated on the capacitive touch panel. Then, the capacitive touch panel calculates a position where the inducting current is generated according to the inducting current. Thus, the stylus can control the capacitive touch panel.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIGs. 1A and 1B are schematic views of two operating states of an electronic device according to an embodiment of the present invention.

FIGs. 2A and 2B are schematic views of two distribution modes of magnetic poles of a stylus.

### DESCRIPTION OF THE EMBODIMENTS

Reference will now be made in detail to the present embodiments of the invention, examples of which are illustrated in the accompanying drawings. Wherever possible, the same reference numbers arc used in the drawings and the description to refer to the same or like parts.

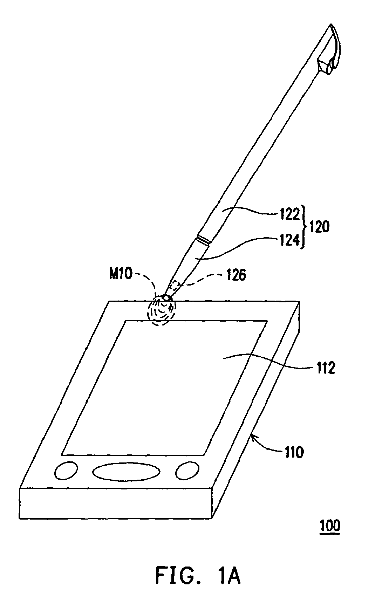

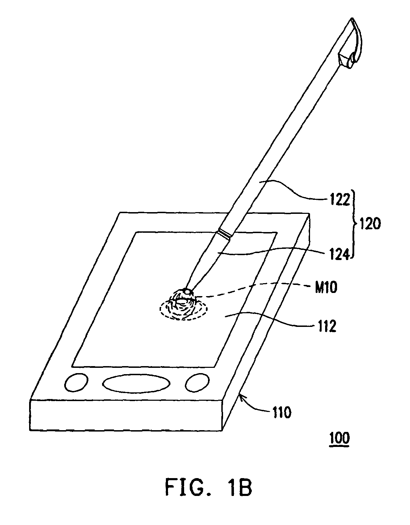

FIGs. 1A and 1B are schematic views of two operating states of an electronic device according to an embodiment of the present invention. Referring to FIG. 1A, an electronic device 100 according to this embodiment includes a device body 110 and a stylus 120. In this embodiment, the electronic device 100 may be a personal digital assistant (PDA), an ultra mobile PC (UMPC), a smart phone, a handheld mobile phone, or another electronic device with a touch control function. The device body 110 has a capacitive touch panel 112. The stylus 120 has a handle 122 and a head 124. The head 124 is magnetic. Here, the handle 122 and the head 124 are not limited to independent components, but may be formed integrally. The handle 122 is held by a user, and the head 124 approaches the capacitive touch panel 112 in use. The head 124 may be made of a magnetic material, or may be provided with a magnet 126 at a tip of the head 124.

When a relative speed exists between the head 124 of the stylus 120 and any region of the capacitive touch panel 112, an inducting current is generated on the region of the capacitive touch panel 112 due to magnetic force lines M10 of the head 124, as shown in FIG. 1B. Thus, the capacitive touch panel 112 can calculate the position where the inducting current is generated. In other words, the magnetic stylus 120 can be used to operate the capacitive touch panel 112. Compared with a conventional electronic device having a capacitive touch panel that can be operated only with a finger, the magnetic stylus 120 according to this embodiment can operate the capacitive touch panel 112, so that the icons on the capacitive touch panel 112 may be configured into a smaller size, thereby reducing the possibility of miss touching the icons. In addition, when a user uses the magnetic stylus 120 to operate the capacitive touch panel 112, the user can see the icons on the capacitive touch panel 112 clearly.

In this embodiment, the handle 122 and the head 124 are both conductive; however, the present embodiment is not limited hereby. If the handle 122 and the head 124 are both conductive, when the user holds the handle 122, the electric field of the user is different from that of the capacitive control panel 112. Thus, when the stylus 120 approaches the capacitive touch panel 112, the inducting current is generated on the capacitive touch panel 112, which improves the success rate of the operations on the electronic device 100 through using the stylus 120. In the present embodiment, the handle 122 and the head 124 are both conductive, which indicates that the handle 122 and the head 124 can provide a conductive path with a resistance lower than a resistance of a human body. In addition, for example, the handle 122 may be made of a metal or another conductive material. However, the handle 122 may also be formed by an insulating main body (not shown) and a conductive layer (not shown) enveloping the insulating main body. The insulating main body may be made of plastics or other insulating materials, especially insulating materials with a low cost. The conductive layer may be made of a metal or another appropriate conductive material, which envelops the insulating main body through electroplating or another appropriate manner.

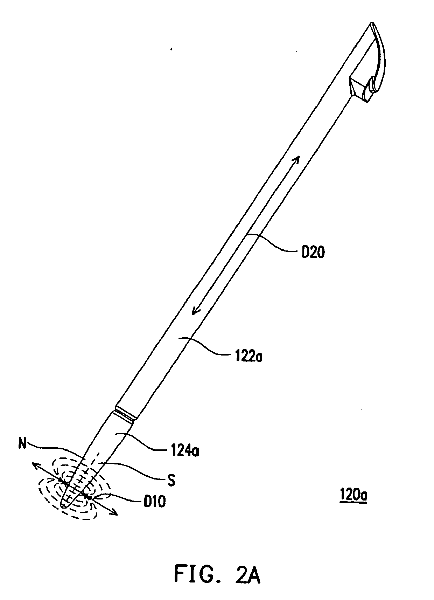

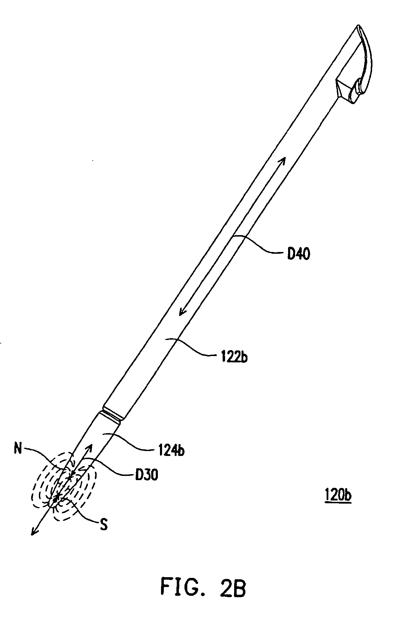

FIGs. 2A and 2B are schematic views of two distribution modes of magnetic poles of a stylus. Referring to FIG. 2A, a connecting line D10 between magnetic poles N and S of a head 124a of a stylus 120a is substantially perpendicular to a lengthwise direction D20 of a handle 122a. Alternatively, referring to FIG. 2B, a connecting line D30 between magnetic poles N and S of a head 124b of a stylus 120b is substantially parallel to a lengthwise direction D40 of a handle 122b. The two distribution modes of the magnetic poles described above are only exemplary. The magnetic poles of the stylus of the present invention may also be distributed in other modes.

To sum up, the stylus of the present application has a magnetic head. When a relative speed exists between the stylus and the capacitive touch panel, an inducting current is generated on the capacitive touch panel, and the capacitive touch can calculate the position where the inducting current is generated according to the inducting current. Thus, the stylus can control the capacitive touch panel. In addition, the head of the stylus is smaller than fingers, so the stylus does not shield the sight of the user, and thus smaller icons are also applicable.

It will be apparent to persons of ordinary art in the art that various modifications and variations can be made to the structure of the present invention without departing from the scope or spirit of the invention. In view of the foregoing, it is intended that the present invention cover modifications and variations of this invention provided they fall within the scope of the following claims.

## Claims

1. A stylus, adapted to inductively control a capacitive touch panel, comprising a handle and a head, wherein the head is magnetic, and wherein the handle and the head are conductive and provide a conductive path with a resistance lower than a resistance of a human body of a user when said stylus is held by said user.

2. The stylus according to claim 1, wherein a connecting line between two magnetic poles of the head is substantially perpendicular to a lengthwise direction of the handle.

3. The stylus according to claim 1, wherein a connecting line between two magnetic poles of the head is substantially parallel to a lengthwise direction of the handle.

4. The stylus according to claim 1, wherein the handle is made of a conductive material.

5. The stylus according to claim 1, wherein the handle comprises an insulating main body and a conductive layer enveloping the insulating main body.

6. An electronic device, comprising:
a device body, comprising a capacitive touch panel; and
a stylus, adapted to inductively control the capacitive touch panel, comprising a handle and a head, wherein the head is magnetic, and wherein the handle and the head are conductive and provide a conductive path with a resistance lower than a resistance of a human body of a user when said stylus is held by said user.

7. The electronic device according to claim 6, wherein a connecting line between two magnetic poles of the head is substantially perpendicular to a lengthwise direction of the handle.

8. The electronic device according to claim 6, wherein a connecting line between two magnetic poles of the head is substantially parallel to a lengthwise direction of the handle.

9. The electronic device according to claim 6, wherein the handle is made of a conductive material.

10. The electronic device according to claim 6, wherein the handle comprises an insulating main body and a conductive layer enveloping the insulating main body.

## Patentansprüche

1. Stift, angepasst, um ein kapazitives Berührfeld induktiv zu steuern, umfassend einen Griff und einen Kopf, wobei der Kopf magnetisch ist, und wobei der Griff und der Kopf leitfähig sind und einen leitfähigen Pfad mit einem Widerstand bereitstellen, der geringer ist als der Widerstand eines menschlichen Körpers eines Benutzers, wenn der Stift von dem Benutzer gehalten wird.

2. Stift gemäß Anspruch 1, wobei eine Verbindungsleitung zwischen zwei Magnetpolen des Kopfs im Wesentlichen senkrecht zu einer Längsrichtung des Griffs ist.

3. Stift gemäß Anspruch 1, wobei eine Verbindungsleitung zwischen zwei Magnetpolen des Kopfs im Wesentlichen parallel zu einer Längsrichtung des Griffs ist.

4. Stift gemäß Anspruch 1, wobei der Griff aus einem leitfähigen Material gefertigt ist.

5. Stift gemäß Anspruch 1, wobei der Griff einen isolierenden Hauptkörper und eine leitfähige Schicht umfasst, die den isolierenden Hauptkörper umhüllt.

6. Elektronische Vorrichtung, umfassend:
einen Vorrichtungskörper, der ein kapazitives Berührfeld umfasst; und
einen Stift, angepasst, um das kapazitive Berührfeld induktiv zu steuern, umfassend einen Griff und einen Kopf, wobei der Kopf magnetisch ist, und wobei der Griff und der Kopf leitfähig sind und einen leitfähigen Pfad mit einem Widerstand bereitstellen, der geringer ist als ein Widerstand eines menschlichen Körpers eines Benutzers, wenn der Stift von dem Benutzer gehalten wird.

7. Elektronische Vorrichtung gemäß Anspruch 6, wobei eine Verbindungsleitung zwischen zwei Magnetpolen des Kopfs im Wesentlichen senkrecht zu einer Längsrichtung des Griffs ist.

8. Elektronische Vorrichtung gemäß Anspruch 6, wobei eine Verbindungsleitung zwischen zwei Magnetpolen des Kopfs im Wesentlichen parallel zu einer Längsrichtung des Griffs ist.

9. Elektronische Vorrichtung gemäß Anspruch 6, wobei der Griff aus einem leitfähigen Material gefertigt ist.

10. Elektronische Vorrichtung gemäß Anspruch 6, wobei der Griff einen isolierenden Hauptkörper und eine leitfähige Schicht umfasst, die den isolierenden Hauptkörper umhüllt.

## Revendications

1. Stylet, apte à commander de manière inductive un écran tactile capacitif, comprenant un manche et une tête, dans lequel la tête est magnétique, et dans lequel le manche et la tête sont conducteurs et fournissent un chemin conducteur avec une résistance inférieure à une résistance d'un corps humain d'un utilisateur lorsque ledit stylet est tenu par ledit utilisateur.

2. Stylet selon la revendication 1, dans lequel une ligne de connexion entre deux pôles magnétiques de la tête est sensiblement perpendiculaire à une direction longitudinale du manche.

3. Stylet selon la revendication 1, dans lequel une ligne de connexion entre deux pôles magnétiques de la tête est sensiblement parallèle à une direction longitudinale du manche.

4. Stylet selon la revendication 1, dans lequel le manche est constitué d'un matériau conducteur.

5. Stylet selon la revendication 1, dans lequel le manche comprend un corps principal isolant et une couche conductrice enveloppant le corps principal isolant.

6. Dispositif électronique, comprenant :
un corps de dispositif, comprenant un écran tactile capacitif ; et
un stylet, apte à commander de manière inductive l'écran tactile capacitif, comprenant un manche et une tête, dans lequel la tête est magnétique, et dans lequel le manche et la tête sont conducteurs et fournissent un chemin conducteur avec une résistance inférieure à une résistance d'un corps humain d'un utilisateur lorsque ledit stylet est tenu par ledit utilisateur.

7. Dispositif électronique selon la revendication 6, dans lequel une ligne de connexion entre deux pôles magnétiques de la tête est sensiblement perpendiculaire à une direction longitudinale du manche.

8. Dispositif électronique selon la revendication 6, dans lequel une ligne de connexion entre deux pôles magnétiques de la tête est sensiblement parallèle à une direction longitudinale du manche.

9. Dispositif électronique selon la revendication 6, dans lequel le manche est constitué d'un matériau conducteur.

10. Dispositif électronique selon la revendication 6, dans lequel le manche comprend un corps principal isolant et une couche conductrice enveloppant le corps principal isolant.
